(19) Europäisches Patentamt / European Patent Office / Office européen des brevets

(11) **EP 3 860 798 B1**

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **19778451.5**

(22) Anmeldetag: **20.09.2019**

(51) Internationale Patentklassifikation (IPC):
**B23K 26/06** *(2014.01)* **B23K 26/073** *(2006.01)*
**B23K 26/352** *(2014.01)*

(52) Gemeinsame Patentklassifikation (CPC):
**B23K 26/0643; B23K 26/0006; B23K 26/0648;
B23K 26/0732; B23K 26/0738; B23K 26/352;**
B23K 2101/40; B23K 2101/42; G02B 27/0927;
G02B 27/123

(86) Internationale Anmeldenummer:
**PCT/EP2019/075349**

(87) Internationale Veröffentlichungsnummer:
**WO 2020/069885 (09.04.2020 Gazette 2020/15)**

(54) **LASERBEARBEITUNGSSYSTEM**

LASER MACHINING SYSTEM

SYSTÈME D'USINAGE AU LASER

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **02.10.2018 DE 102018216940**

(43) Veröffentlichungstag der Anmeldung:
**11.08.2021 Patentblatt 2021/32**

(73) Patentinhaber: **3D-Micromac AG
09126 Chemnitz (DE)**

(72) Erfinder:
• **LEICHSENRING, Torsten
08134 Wildenfels (DE)**
• **ALBERT, Sven
09322 Penig (DE)**
• **WAGNER, Uwe
09224 Chemnitz (DE)**
• **SCHMIDT, Thomas
07552 Gera (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
EP-A2- 0 939 341 EP-A2- 1 122 020
WO-A1-2011/012503 DE-B3- 102007 044 298
JP-A- S 636 540 US-A- 5 440 423

## Beschreibung

ANWENDUNGSGEBIET UND STAND DER TECHNIK

Die Erfindung betrifft ein Laserbearbeitungssystem zur Erzeugung eines Laserstrahls mit einem linienförmigen Strahlquerschnitt gemäß dem Oberbegriff von Anspruch 1.

Bei der Nutzung derartiger Laserbearbeitungssysteme wird ein zu bearbeitendes Werkstück im Bereich einer Bearbeitungsebene angeordnet und mit dem Laserstrahl derart bestrahlt, dass auf der Oberfläche des zu bearbeitenden Werkstücks ein mehr oder weniger linienförmiger "Laserfleck" entsteht. Der Strahlquerschnitt kann durch eine kurze Strahlquerschnittsachse (im Folgenden vereinfacht als "kurze Achse" oder "kurze Strahlachse" bezeichnet) und eine dazu senkrechte lange Strahlquerschnittsachse (im Folgenden vereinfacht als "lange Achse" oder "lange Strahlachse" bezeichnet) charakterisiert werden.

Laserbearbeitungssysteme dieser Art, die einen sogenannten Line Beam erzeugen können, werden heutzutage unter anderem beim Laser-Annealing und bei Laser-Lift-Off-Verfahren eingesetzt. Typischerweise liegt bei diesen Anwendungen die Breite des Strahlprofils (gemessen entlang der kurzen Achse) deutlich unter 1 mm, beispielsweise im Bereich von ca. 300 $\mu$m, während die Länge (gemessen entlang der langen Achse) bis zu einigen 100 mm betragen kann, beispielsweise im Bereich von ca. 300 mm. Als Laserstrahlquellen werden üblicherweise Excimerlaser mit Wellenlängen im UV-Bereich, beispielsweise bei ca. 193 nm, 248 nm oder 308 nm, eingesetzt.

Beim Laser-Annealing wird eine Relativbewegung zwischen dem Laserstrahl und dem Werkstück in der Richtung senkrecht zur langen Achse erzeugt, entweder durch Bewegung des Werkstücks selbst oder durch Bewegung des Laserstrahls über die Oberfläche mit Hilfe eines Scanners. Eine Kombination beider Bewegungen ist ebenfalls möglich. Dieser Prozess wird z.B. angewendet bei der Herstellung von Flat-Panel-Displays. Dabei wird durch die Bestrahlung eine Schicht amorphen Siliziums erwärmt und aufgeschmolzen und beim Wiedererstarren in eine polykristalline Si-Schicht umgewandelt. Dadurch erhöht sich die Mobilität der Ladungsträger in der Si-Schicht, was letztlich zu effizienteren und energiesparenderen Displays führt. Andere Anwendungen von Laser-Annealing mit linienförmigen Strahlprofilen sind das Aktivieren von Dotierstoffen in einer Halbleiterschicht oder die Erzeugung von Kontakten in Halbleiterbauelementen auf SiC-Wafern (Ohmic Contact Formation, OCF). Dabei wird die Grenzschicht zwischen dem SiC-Wafer und der darauf befindlichen Metallschicht aufgeschmolzen, so dass beim Abkühlen in diesem Bereich ein Metallsilizid entsteht.

Bei Laser-Lift-Off-Verfahren wird, ähnlich wie beim Laser-Annealing, eine Relativbewegung zwischen dem Werkstück und dem Laserstrahl erzeugt. Das zu bearbeitende Werkstück besteht dabei aus einem Schichtstapel, der mit einem Aufwachssubstrat verbunden ist, z.B. einem GaN-Schichtsystem auf einem Saphirsubstrat. Durch Bestrahlung der Grenzschicht zwischen Schichtsystem und Substrat werden die Schichten vom Substrat gelöst und können dann auf ein weiteres (möglicherweise ebenfalls beschichtetes) Substrat transferiert werden.

Für eine präzise Bearbeitung sollte die Intensitätsverteilung im Strahlquerschnitt in der Bearbeitungsebene möglichst gleichmäßig bzw. homogen sein. Angestrebt werden meist sogenannte Flat-Top-Strahlprofile.

Ein gattungsgemäßes Laserbearbeitungssystem umfasst eine Laserstrahlquelle, die im Betrieb einen rohen (noch nicht aufbereiteten) Laserstrahl erzeugt bzw. emittiert, sowie nachgeschaltete Einrichtungen zur Strahlformung und Homogenisierung. Zu diesen Einrichtungen gehört vorzugsweise ein der Laserstrahlquelle nachgeschaltetes Strahlaufweitungssystem zum Empfang des rohen Laserstrahls und zur Erzeugung eines aufgeweiteten Laserstrahls. Dem Strahlaufweitungssystem ist ein Homogenisierungssystem nachgeschaltet, das den aufgeweiteten Laserstrahl empfängt und daraus einen in Bezug auf die Lichtintensitätsverteilung homogenisierten Laserstrahl mit linienförmigem Strahlquerschnitt in der Bearbeitungsebene erzeugt.

Aus dem Stand der Technik ist das Prinzip der Strahlformung eines Laserstrahls durch Mikrolinsenarrays oder gekreuzte Zylinderlinsenarrays bekannt. Dabei verwendete abbildende Homogenisierungssysteme bestehen aus zwei hintereinander angeordneten Linsenarrays und einer nachgeschalteten Kondensorlinse. Das erste Linsenarray zerteilt den einfallenden Strahl in Teilstrahlen, das zweite Linsenarray verhält sich in Kombination mit der nachgeschalteten Kondensorlinse wie eine Anordnung von einzelnen Objektivlinsen, die die Bilder der Teilstrahlen in einer nachfolgenden Überlagerungsebene (nämlich der Brennebene der Kondensorlinse) überlagert. Durch die Überlagerung der einzelnen, jeweils für sich genommen inhomogenen Teilstrahlen kann dort ein homogenisiertes Flat-Top-Strahlprofil entstehen.

Gattungsgemäße Laserbearbeitungssysteme sind dafür konfiguriert, den Laserstrahl getrennt für die lange Achse und die kurze Achse zu homogenisieren. Dies ermöglicht es, unterschiedliche Strahlabmessungen in zueinander senkrechten Richtungen zu erzeugen. Dazu weist das Homogenisierungssystem eine erste Homogenisierungsanordnung zur Homogenisierung entlang der kurzen Achse und eine zweite Homogenisierungsanordnung zur Homogenisierung entlang der langen Achse auf. Jede der Homogenisierungsanordnungen weist optische Elemente zur Zerlegung des Laserstrahls in eine Vielzahl von Teilstrahlen und ein Kondensorsystem zur Überlagerung der Teilstrahlen in einer Überlagerungsebene auf. Bei der Überlagerungsebene kann es sich um die Bearbeitungsebene oder eine dazu optisch konjugierte Ebene handeln.

Die DE 10 2007 044 298 B3 beschreibt eine Anordnung zum Erzeugen eines Laserstrahls mit einem linienhaften Strahlquerschnitt, der eine lange und eine kurze Strahlquerschnittsachse besitzt, bei dem der aus einer Laserstrahlquelle austretende Laserstrahl getrennt bezüglich der langen Achse und der kurzen Achse homogenisiert wird.

Die WO 2011/012503 A1 offenbart ein optisches System zum Erzeugen eines Lichtstrahls zur Behandlung eines in einer Substratebene angeordneten Substrats, wobei der Lichtstrahl in einer ersten Dimension senkrecht zur Ausbreitungsrichtung des Lichtstrahls eine Strahllänge und in einer zweiten Dimension senkrecht zur ersten Dimension und zur Lichtausbreitungsrichtung eine Strahlbreite aufweist, wobei die Strahllänge gross gegenüber der Strahlbreite ist. Das optische System umfasst eine erste optische Anordnung, die eine Mehrzahl von in der ersten Dimension nebeneinander angeordneten Lichtkanälen definiert, die den Lichtstrahl in der ersten Dimension in eine Mehrzahl von Teilfeldern aufteilen, wobei die Teilfelder in der ersten Dimension einander überlagert in die Substratebene einfallen. Weiterhin gibt es eine zweite optische Anordnung, die in Lichtausbreitungsrichtung vor der ersten optischen Anordnung angeordnet ist und die in der ersten Dimension eine solche Ausdehnung aufweist und ein Winkelspektrum des auf die zweite optische Anordnung einfallenden Lichtstrahls in der ersten Dimension so verbreitert, dass der Lichtleitwert der zweiten optischen Anordnung in der ersten Dimension 50 % bis 100 % des Gesamtlichtleitwerts des optischen Systems in der ersten Dimension beträgt, so dass zumindest näherungsweise alle Lichtkanäle der ersten optischen Anordnung gleichmässig mit Licht ausgeleuchtet sind.

AUFGABE UND LÖSUNG

Der Erfindung liegt die Aufgabe zugrunde, ein Laserbearbeitungssystem der eingangs beschriebenen Art bereitzustellen, das über lange Zeiträume stabil arbeitet, einen kompakten Aufbau aufweist und einen hohen Wirkungsgrad bei der Ausnutzung der Energie der verwendeten Laserlichtquelle für die Bearbeitung bietet.

Zur Lösung dieser Aufgabe stellt die Erfindung ein Laserbearbeitungssystem mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß der beanspruchten Erfindung wird ein Laserbearbeitungssystem bereitgestellt, bei dem die erste Homogenisierungsanordnung (für die kurze Achse) ein erstes Kondensorsystem mit mindestens einem ersten Spiegel und die zweite Homogenisierungsanordnung (für die lange Achse) ein zweites Kondensorsystem mit mindestens einem zweiten Spiegel aufweist. In den Kondensorsystemen werden also jeweils eine oder mehrere reflektive optische Komponenten verwendet.

Die Erfinder haben erkannt, dass herkömmliche Laserbearbeitungssysteme gewisse Nachteile haben können, wenn sie ausschließlich mit refraktiven Komponenten, insbesondere also mit Linsen und Linsenarrays aufgebaut sind. Um einen Linienstrahl zu erzeugen, werden meist Zylinderlinsenarrays und Zylinderlinsen verwendet. Die nachgeschalteten Kondensorlinsen müssen groß genug sein, so dass kein Teilstrahl durch deren Aperturen abgeschattet wird. Daher sollten üblicherweise die freien Aperturen der Kondensorlinsen mindestens so groß sein wie die der Linsenarrays. Um Linsen mit den benötigten Krümmungsradien und freien Aperturen herstellen zu können, müssen diese in der Regel eine relativ große Dicke haben.

Dies hat den Nachteil, dass die optischen Verluste erhöht werden. Durch unerwünschte Reflektionen an den Oberflächen und Absorption innerhalb des Materials kann jedes optische Element einen Verlust an Laserenergie von einigen Prozent verursachen. So kann es beim Einsatz einer komplett mit refraktiven Komponenten aufgebauten Homogenisierungsanordnung über den gesamten Strahlweg zu optischen Verlusten von ca. 30% oder mehr kommen. Die UV-Strahlung kann darüber hinaus im Betrieb eine Degradation des Materials der Linsen verursachen, z.B. durch Erzeugung von Farbzentren. Dies kann zu verkürzten Standzeiten führen.

Die genannten Nachteile können bei Nutzung der Erfindung reduziert oder vermieden werden. Die Standzeiten der Optiken können erhöht, die optischen Verluste verringert und die Anzahl der benötigten optischen Elemente begrenzt werden. Durch die verringerten optischen Verluste kann bei gleicher Laserleistung und gleichem Strahlprofil auf dem Werkstück eine höhere Energiedichte erreicht werden. Es kann somit ein besserer Wirkungsgrad erreicht werden. Alternativ kann bei gleicher Energiedichte ein längeres Strahlprofil erzeugt werden.

Ein Kondensorsystem kann mit Hilfe einer Kombination von einer oder mehreren Linsen und einem oder mehreren Spiegeln aufgebaut sein, so dass es ein katadioptrisches optisches System ist. Vorzugsweise ist jedoch vorgesehen, dass das erste Kondensorsystem und das zweite Kondensorsystem jeweils als katoptrisches optisches System ausgebildet sind, also ausschließlich aus Spiegeln aufgebaut sind und keine Linsen enthalten. Dadurch können die mit Linsen verbundenen Nachteile besonders wirksam vermieden werden. Außerdem ist häufig eine besonders günstige Nutzung vorhandenen Bauraums möglich.

Vorzugsweise weist das erste Kondensorsystem und/oder das zweite Kondensorsystem genau zwei Spiegel auf. Insbesondere sind ein Konkavspiegel und ein Konvexspiegel kombiniert. Dadurch kann ein besonders kompakter Aufbau mit wenig potentiell verlustbehafteten optisch funktionalen Flächen (Spiegelflächen) realisiert werden.

Gemäß einer Weiterbildung weisen die optischen Elemente zur Zerlegung des Laserstrahls in eine Vielzahl von Teilstrahlen für jede der Achsen ein erstes Zylinderlinsenarray und ein nachgeschaltetes zweites Zylinderlinsenarray auf, so dass die erste und die zweite Homogenisierungsanordnung jeweils ein (katadioptrisches) abbildendes Homogenisierungssystem bilden. Dadurch kann u.a. eine besonders gute Homogenität über den Strahlquerschnitt in der Überlagerungsebene erzielt werden. Alternativ kann es in manchen Fällen vorgesehen sein, dass die optischen Elemente zur Zerlegung des Laserstrahls in eine Vielzahl von Teilstrahlen für jede der Achsen nur ein einziges Zylinderlinsenarray aufweisen, das gemeinsam mit dem nachgeschalteten Kondensorsystem für dieselbe Achse ein nicht-abbildendes Homogenisierungssystem bildet.

Für viele Anwendungen kann es günstig sein, ein relativ großes Aspektverhältnis zwischen den Längen des Strahlquerschnitts entlang der langen Achse und der kurze Achse zu erreichen. Bei vielen Ausführungsformen liegt das Aspektverhältnis im Bereich von 100 oder mehr. Das Aspektverhältnis kann beispielsweise im Bereich von 100 bis 1000 liegen, gegebenenfalls auch darüber oder darunter.

Besonders hohe Aspektverhältnisse sind bei manchen Ausführungsformen dadurch begünstigt, dass das erste Kondensorsystem dazu ausgelegt ist, mit Abstand vor der Bearbeitungsebene ein (reelles) Zwischenbild zu erzeugen und dass zwischen dem Zwischenbild und der Bearbeitungsebene ein (optisches) Abbildungssystem zur Abbildung des Zwischenbildes auf die Bearbeitungsebene angeordnet ist. Dieser Aufbau berücksichtigt, dass die Kondensorsysteme für die lange Achse und die kurze Achse stark unterschiedliche Brennweiten haben können, insbesondere wenn hohe Aspektverhältnisse angestrebt werden. Mithilfe der Zwischenabbildung für die kurze Achse können diese Ziele auf günstige Weise erreicht werden.

Bei den meisten Ausführungsformen ist das Abbildungssystem dafür ausgelegt, das Zwischenbild in der ersten Achse ohne Größenänderung in die Bearbeitungsebene abzubilden (1:1 Abbildung in der kurzen Achse). Alternativ sind auch vergrößernde oder verkleinernde Zwischenabbildungen in der kurzen Achse möglich. Die lange Achse wird vorzugsweise durch das Abbildungssystem nicht beeinflusst.

Das Abbildungssystem kann mit Hilfe von drei oder mehr Spiegeln aufgebaut sein. Gemäß einer Weiterbildung hat das Abbildungssystem jedoch nur zwei Spiegel, nämlich einen ersten Spiegel und genau einen zweiten Spiegel. Dadurch ergibt sich ein einfacher Aufbau mit wenigen Komponenten. Der erste Spiegel kann eine konkave Spiegelfläche haben, der zweite Spiegel eine konvexe Spiegelfläche.

Besonders günstig kann es sein, wenn das Abbildungssystem einen symmetrischen Aufbau aufweist. Dadurch kann erreicht werden, dass typische Bildfehler, die sich bei Verwendung gekrümmter Spiegel ergeben können, wie zum Beispiel Koma, innerhalb des Abbildungssystems aufgrund des symmetrischen Aufbaus kompensiert werden. Somit kann die Abbildung des Zwischenbildes auf die Bearbeitungsebene weitgehend frei von geometrischen Bildfehlern sein.

Eine besonders günstige Auslegung ergibt sich, wenn der erste Spiegel eine Brennweite hat, die dem Abstand zwischen dem ersten Spiegel und dem zweiten Spiegel sowie der doppelten Brennweite des zweiten Spiegels entspricht, wobei weiterhin ein Abstand zwischen dem Abbildungssystem und dem Zwischenbild der doppelten Brennweite des ersten Spiegels entspricht.

Bei einem Ausführungsbeispiel ist das Abbildungssystem derart angeordnet und aufgebaut, dass der Laserstrahl von einem ersten Bereich des ersten Spiegels zu dem zweiten Spiegel und vom zweiten Spiegel zu einem zweiten Bereich des ersten Spiegels reflektiert wird. Der erste Spiegel wird also doppelt genutzt. Der erste und der zweite Bereich können einander teilweise überlappen oder ohne gegenseitige Überlappung mit Abstand zueinander liegen.

Gemäß einer Weiterbildung ist im Strahlengang zwischen der Laserquelle und der Bearbeitungsebene mindestens ein ebener Umlenkspiegel angeordnet, also mindestens ein Planspiegel ohne Brechkraft. Durch die Verwendung mindestens eines ebenen Umlenkspiegels sind eine verbesserte Bauraumnutzung und ein kompakter Aufbau möglich. Gegebenenfalls können durch eine Neigungsverstellung eines Umlenkspiegels z.B. im Rahmen einer Justage, gewisse Strahleigenschaften optimiert werden.

Bei manchen Ausführungsformen ist ein Umlenkspiegel optisch zwischen dem letzten optischen Element mit Brechkraft und der Bearbeitungsebene angeordnet. Somit handelt es sich bei dem Umlenkspiegel um das letzte den Strahlverlauf ändernde optische Element im Strahlgang unmittelbar vor der Bearbeitungsebene. Dieser Umlenkspiegel kann fest montiert sein, so dass außer einer Justiermöglichkeit keine Beweglichkeit gegeben ist. Bei anderen Ausführungsformen ist dieser Umlenkspiegel beweglich gelagert und gesteuert verschwenkbar. Der Umlenkspiegel kann dann als Scannerspiegel genutzt werden und bekommt somit eine Doppelfunktion.

Alternativ oder zusätzlich kann ein Umlenkspiegel auch an anderer Position innerhalb des Strahlengangs vorgesehen sein. Bei Ausführungsformen, welche für die kurze Achse ein Zwischenbild erzeugen, das mit einem Abbildungssystem in die Bearbeitungsebene abgebildet wird, kann vor diesem Abbildungssystem ein Umlenkspiegel angeordnet sein. Der Umlenkspiegel kann insbesondere zwischen dem Zwischenbild und dem Abbildungssystem angeordnet sein. Dadurch ergeben sich größere Freiheitsgrade für Anordnung und Ausrichtung des Abbildungssystems.

Bei allen Ausführungsformen kann unmittelbar vor der Bearbeitungsebene ein vorzugsweise auswechselbares Schutzglas vorgesehen sein, welches den Laserstrahl möglichst ungehindert und unverändert durchlassen sollte. Das Schutzglas, das z.B. die Gestalt einen planplatte haben kann, kann verhindern, dass sich bei der Laserbearbeitung entstehende Partikel oder Dämpfe auf den Spiegeln niederschlagen. Stattdessen landet alles auf dem Schutzglas, das bei Bedarf einfach ausgetauscht werden kann.

Es kann gewünscht sein, mit einem Laserbearbeitungssystem für unterschiedliche Anwendungen Linienstrahlen bzw. "line beams" mit unterschiedlichen Dimensionen in Längsrichtung (lange Achse) und/oder Breitenrichtung (kurze Achse) wahlweise erzeugen zu können. Bei manchen Ausführungsformen ist eine Erzeugung eines Linienstrahls mit anderen Abmessungen dadurch erleichtert, dass bei der ersten Homogenisierungsanordnung und/oder bei der zweiten Homogenisierungsanordnung die optischen Elemente zur Erzeugung der Vielzahl von Teilstrahlen konstruktiv auswechselbar sind, wobei sie vorzugsweise in einer als Ganzes austauschbaren Baugruppe zusammengefasst sind. Dadurch ist eine Umrüstung auf andere Liniendimensionen und/oder andere Aspektverhältnisse durch Austausch dieser optischen Elemente relativ einfach möglich. Die Kondensorsysteme und das Abbildungssystem für die kurze Achse müssen dazu nicht ausgetauscht werden.

Vorzugsweise ist das Laserbearbeitungssystem so ausgelegt, dass der Linienstrahl bzw. der Strahlquerschnitt in der Bearbeitungsebene dadurch charakterisiert ist, dass dessen Profil sowohl in der langen Achse als auch in der kurzen Achse eine Flat-Top-Form mit nahezu konstanter Energiedichte über den größten Teil des Strahlprofils und nahezu senkrechten Abfall der Energiedichte in den Außenbereich aufweist, wobei vorzugsweise eine Homogenitätsabweichung entlang der kurzen Achse bei 4 % oder weniger und/oder eine Homogenitätsabweichung entlang der langen Achse bei 1,5 % oder weniger liegt. Dadurch sind besonders präzise Bearbeitungsprozesse möglich.

KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.

Fig. 1     zeigt schematisch den Aufbau eines Laserbearbeitungssystems und des Strahlengangs bei einem ersten Ausführungsbeispiel;

Fig. 2     zeigt eine schematische Darstellung der Energieverteilung des Rohstrahls unmittelbar nach Austritt aus der Laserstrahlquelle;

Fig. 3     zeigt eine schematische Darstellung der Energieverteilung des Laserstrahls in der Bearbeitungsebene entsprechend einem Flat-Top-Profil;

Fig. 4     bis Fig. 9 zeigen charakteristische Strahlprofile an unterschiedlichen Positionen entlang des Strahlgangs;

Fig. 10    zeigt schematisch den Aufbau eines Laserbearbeitungssystems und des Strahlengangs bei einem zweiten Ausführungsbeispiel.

DETAILLIERTE BESCHREIBUNG DER AUSFÜHRUNGSBEISPIELE

Nachfolgend werden Ausführungsbeispiele von Laserbearbeitungssystemen zur Erzeugung eines Laserstrahls mit einem linienförmigen Strahlquerschnitt mit einer kurzen Achse (kurze Strahlquerschnittsachse) und einer dazu senkrechten langen Achse (lange Strahlquerschnittsachse) in einer Bearbeitungsebene beschrieben. Laserbearbeitungssysteme dieser Art können z.B. beim Laser-Annealing und bei Laser-Lift-Off-Verfahren eingesetzt werden, aber auch bei anderen Anwendungen. Bezogen auf das Systemkoordinatensystem KS verläuft die lange Achse parallel zur x-Richtung, die kurze Achse parallel zur y-Richtung und die z-Achse senkrecht zur Bearbeitungsebene 105. Die Bearbeitungsebene ist diejenige Ebene, in der das Strahlprofil die gewünschten Eigenschaften (insbesondere Aspektverhältnis und Energieverteilung) aufweist. Ein zu bearbeitendes Werkstück wird in der Regel so angeordnet, dass die zu bearbeitende Werkstückoberfläche in der Bearbeitungsebene oder in deren unmittelbarer Nähe liegt.

Wenn bei der Beschreibung der relative Anordnung optischer Elemente zueinander die Begriffe "vor", "hinter", vorgeschaltet", "nachgeschaltet", "zwischen" etc. verwendet werden, so ist die relative Anordnung entlang der Strahlausbreitungsrichtung gemeint. Die relative geometrische Anordnung, also die Anordnung im Bauraum, kann davon abweichen.

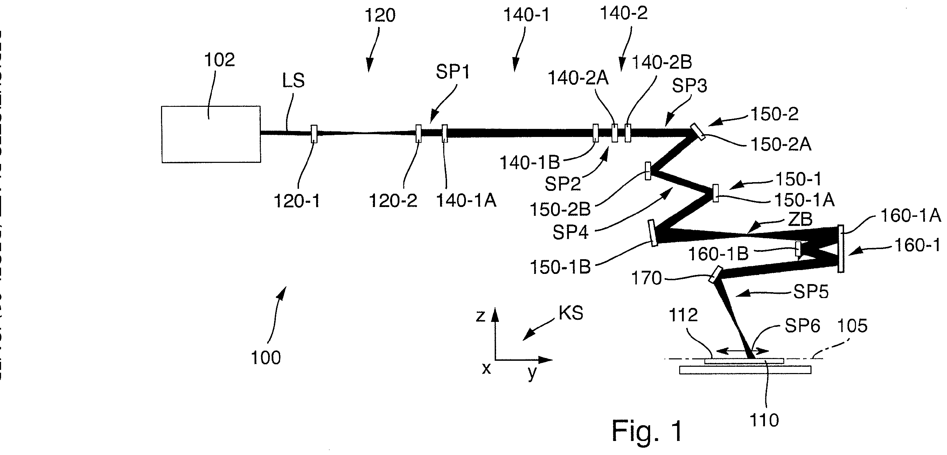

Fig. 1 zeigt schematisch den Aufbau eines Laserbearbeitungssystems 100 und des Strahlengangs, den ein Laserstahl LS von der Laserstrahlquelle 102 bis zu der Bearbeitungsebene 105 durchläuft, in der die Oberfläche 112 eines zu bearbeitenden Werkstücks 110 angeordnet ist.

Der Laserstrahl wird von der Laserstrahlquelle 102 als roher, also noch nicht aufbereiteter Laserstrahl (auch als Rohstrahl bezeichnet) emittiert und wird anschließend durch ein nachgeschaltetes Strahlaufweitungssystem 120 in Form eines Teleskops aufgeweitet und kollimiert. Anschließend wird der aufgeweitete Laserstrahl durch einen abbildenden Homogenisierer homogenisiert und durch das Optiksystem auf das Werkstück 110 im Bereich von dessen Oberfläche 112 abgebildet bzw. fokussiert.

Bei der Laserstrahlquelle 102 handelt es sich in diesem Beispiel um einen Excimerlaser mit einer Wellenlänge von 308 nm und einer Pulsenergie von ca. 1000 mJ. Der emittierte Laserstrahl (Rohstrahl) hat ein in etwa rechteckiges Profil mit Länge im Bereich von 30 - 40 mm und einer Breite von 10 - 15 mm. Die Wellenlänge könnte statt 308 nm auch beispielsweise 248 nm oder 193 nm oder eine andere UV-Wellenlänge sein.

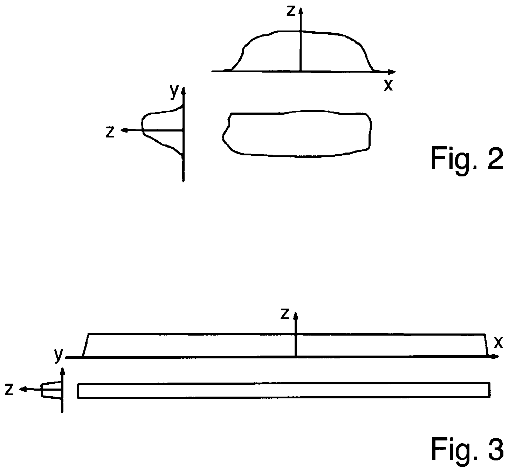

Eine schematische Darstellung des Rohstrahls zeigt Fig. 2. Der Rohstrahl hat ein näherungsweise rechteckiges Profil, wobei ein Querschnitt entlang der kurzen Achse eine gaußähnliche Energieverteilung aufweist. Dagegen zeigt die Energieverteilung entlang der langen Achse bereits eine größere Homogenität.

Der Rohstrahl wird zuerst durch das Teleskop aufgeweitet. Das Strahlaufweitungssystem 120 bzw. das Teleskop 120 besteht aus zwei plankonvexen Zylinderlinsen 120-1, 120-2, deren Abstand der Summe der beiden Brennweiten entspricht (Kepler-Teleskop). Die Zylinderlinsen sind so orientiert, dass der Laserstrahl entlang der langen Achse (parallel zur x-Richtung) aufgeweitet wird, während senkrecht dazu entlang der kurzen Strahlachse keine Aufweitung erfolgt. Die Aufweitung erfolgt, um das nachfolgende Homogenisiererarray gut auszuleuchten - für eine gute Strahlhomogenisierung sollte der Laserstrahl möglichst viele der Mikrolinsen des Homogenisiererarrays überdecken. In diesem Anwendungsbeispiel wird die Breite des Laserstrahls von ca. 50 mm vor der ersten Teleskoplinse 130-1 auf etwa 90 mm im Bereich hinter dem Teleskop vergrößert.

Alternativ könnte das Strahlaufweitungssystem z.B. auch ein Galileo-Teleskop mit einer plankonvexen und einer plankonkaven Seite aufweisen. Die kann z.B. aus Gründen eine besseren Bauraumausnutzung günstig sein.

Die eigentliche Strahlformung erfolgt durch ein nachfolgendes Homogenisierungssystem zum Empfang des aufgeweiteten Laserstrahls und zur Erzeugung eines in Bezug auf die Lichtintensitätsverteilung homogenisierten Laserstrahls mit linienförmigem Strahlquerschnitt in der Bearbeitungsebene 105. Das Homogenisierungssystem umfasst eine dem Strahlaufweitungssystem nachfolgende Anordnung von Zylinderlinsenarrays sowie Kondensorsystemen, die für jede der Achsen einen gesonderten abbildenden Homogenisierer bzw. eine gesonderte Homogenisierungsanordnung bilden. Die Homogenisierung erfolgt dabei für die beiden Achsen (kurze und lange Achse) getrennt bzw. unabhängig voneinander mit einer jeweils eigenen Anordnung aus Linsenarrays und nachgeschalteter Kondensor-/Fokussier-Optik.

Dies kann auch so beschrieben werden, dass das Homogenisierungssystem eine erste Homogenisierungsanordnung zur Homogenisierung entlang der kurzen Achse und eine zweite Homogenisierungsanordnung zur Homogenisierung entlang der langen Achse aufweist bzw. dass das Homogenisierungssystem dafür konfiguriert ist, den Laserstrahl getrennt für die lange Achse und die kurze Achse zu homogenisieren. Jede der beiden Homogenisierungsanordnungen weist optische Elemente zur Zerlegung des Laserstrahls in eine Vielzahl von Teilstrahlen (generell bezeichnet mit Bezugsziffer 140x) und ein Kondensorsystem (generell bezeichnet mit Bezugsziffer 150x) zur Überlagerung der Teilstrahlen in einer Überlagerungsebene auf. Bei Verwendung getrennter Systeme für die beiden Achsen können relativ hohe Aspektverhältnisse mit relativ einfachen optischen Aufbauten erzielt werden.

Die Überlagerung erfolgt jeweils in der Fokusebene des jeweiligen Kondensorsystems. Nur für die lange Achse entspricht diese Fokusebene der Bearbeitungsebene. Für die kurze Achse ist der Fokusebene der Kondensorsystems noch eine Abbildung (mithilfe des Abbildungssystems 160-1) nachgeschaltet, die die Fokusebene auf die Bearbeitungsebene abbildet.

Aufbau und Funktion des Ausführungsbeispiels können auch wie folgt beschrieben werden.

Nach dem Teleskop des Strahlaufweitungssystems 120 sind als erstes zwei Zylinderlinsenarrays 140-1A, 140-1B im Strahlengang platziert, die als optische Elemente 140-1 zur Zerlegung des Laserstrahls in eine Vielzahl von Teilstrahlen für die kurze Achse dienen. Diese Zylinderlinsenarrays können entweder aus einzeln hergestellten und anschließend aneinandergesetzten Zylinderlinsen bestehen oder auch aus einem einzigen Substrat hergestellt sein, das durch z.B. mechanisch und/oder durch ein Ätzverfahren bearbeitet worden sein kann. In diesem Anwendungsbeispiel wird ein sphärisches Profil der Zylinderlinsen verwendet. Da der Rohstrahl des Lasers waagerecht (bzw. in der x-y-Ebene) orientiert ist, d.h. die lange Strahlachse ist waagerecht, sind die Zylinderlinsen dieser Arrays mit ihren Zylinderachsen ebenfalls waagerecht orientiert, nämlich so, dass die längeren Seiten der Einzellinsen parallel zur langen Seite des Strahlprofils verlaufen. Um eine gute Homogenität des (auf die Bearbeitungsebene fallenden) Ausgangsstrahls zu erreichen, sollte eine möglichst große Anzahl an Zylinderlinsen durch den einfallenden Laserstrahl ausgeleuchtet werden. Die Breite einer einzelnen Zylinderlinse beträgt hier etwa 1.3 mm, die Strahlgröße entlang der kurzen Strahlachse an diesem Punkt des Strahlengangs etwa 24 mm. Beide Arrays bestehen aus plankonvexen Zylinderlinsen mit einem Krümmungsradius von 240 mm.

Durch die Zylinderlinsenarrays 140-1A, 140-1B und ein später beschriebenes, dazugehöriges reflektives erstes Kondensorsystem 150-1 wird ein entlang der kurzen Achse homogenisiertes Zwischenbild ZB in einem Abstand von etwa 400 mm nach dem Kondensorsystem 150-1 erzeugt.

Im Anschluss an die Zylinderlinsenarrays 140-1A, 140-1B für die kurze Achse befinden sich im Strahlengang zwei Zylinderlinsenarrays 140-2A und 140-2B, die als optische Elemente 140-2 zur Zerlegung des Laserstrahls in eine Vielzahl von Teilstrahlen für die lange Achse dienen. Diese Zylinderlinsen sind dabei senkrecht zu den Zylinderlinsen 140-1A, 140-1B für die kurze Achse orientiert, sie haben eine Breite von etwa 1.3 - 1.5 mm. Um Abbildungsfehler durch die Zylinderlinsen zu reduzieren und die Homogenität besonders in der langen Achse zu verbessern, haben die Linsen des Arrays 140-2B ein asphärisches Profil mit einer konischen Konstante im Bereich -4 bis 0. Bei anderen Varianten sind sphärische Profile vorgesehen.

Je nach gewünschter Länge des Linienstrahls (entlang der langen Achse) sind hier verschiedene Kombinationen von Krümmungsradien denkbar. Die Krümmungsradien der Linsen des ersten und des zweiten Zylinderlinsenarrays können beispielsweise 20 mm bzw. 5 mm betragen, um einen Strahl von etwa 300 - 370 mm Länge zu erzeugen, oder 12 mm bzw. 20 mm für einen Linienstrahl mit einer Länge von ca. 70 - 110 mm. Auch andere Krümmungsradien oder Kombinationen sowie andere Linienstrahllängen sind möglich.

Das erste Zylinderlinsenarray 140-2A für die lange Achse ist dabei unmittelbar nach dem zweiten Zylinderlinsenarray 140-1B für die kurze Achse platziert.

Durch die Zylinderlinsenarrays wird der Laserstrahl für jede der Achsen getrennt auf eine große Anzahl von Teilstrahlen aufgeteilt.

Die Kondensorsysteme, die diese Teilstrahlen wieder überlagern, bestehen in diesem Anwendungsbeispiel aus je zwei zylindrischen Spiegeln, sind also katoptrische optische Systeme. In einem Bereich von bis zu wenigen 100 µm um die Brennebene der jeweiligen Kondensorsysteme entlang der Strahlausbreitungsrichtung zeigt das Strahlprofil entlang der entsprechenden Achse betrachtet eine Flat-Top-Charakteristik, d.h. einen Strahlquerschnitt mit nahezu konstanter Energiedichte über den größten Teil des Strahlprofils und steilen Flanken in den Außenbereichen. In größerer Entfernung vom Brennpunkt laufen die Teilstrahlen dann wieder auseinander. Fig.3 zeigt schematisch die Intensitätsverteilung in einem Flat-Top-Profil.

Die Größe des Flat-Top-Profils hängt dabei ab von der Brennweite $f_c$ der Kondensoroptik bzw. des Kondensorsystems, den Brennweiten $f_1$ und $f_2$ der Linsenarrays, dem Abstand d zwischen den Arrays und dem Pitch p, d.h. der Breite der Einzellinsen der Arrays:

$$D = \frac{p f_c}{f_1 f_{2_1}} (f_1 + f_2 - d)$$

Eine Besonderheit des Ausführungsbeispiels besteht darin, dass hier als Kondensorsysteme Anordnungen mit gekrümmten Spiegeln verwendet werden, statt wie aus dem Stand der Technik refraktive Kondensorsysteme aus Linsen zu verwenden. Die erste Homogenisierungsanordnung (für die kurze Achse) weist ein erstes Kondensorsystem 150-1 mit ersten Spiegeln 150-1A und 150-1B und die zweite Homogenisierungsanordnung (für die lange Achse) ein zweites Kondensorsystem 150-2 mit zweiten Spiegeln 150-2A und 150-2B auf.

Diese Maßnahme verspricht eine höhere Gesamttransmission des Systems, da lediglich die Verluste an den hochreflektiven Beschichtungen (HR-Beschichtungen) der Spiegelsubstrate auftreten, statt wie bei Linsen die Verluste sowohl an Ein- und Austrittsfläche und weitere Verluste durch Absorption im Material der Linsen.

Zudem sind die Anforderungen an das Substratmaterial bei transmittiven Elementen höher als an Spiegelsubstrate. Dadurch ergeben sich geringere Kosten für die reflektiven Optiken im Vergleich zu transmittiven Elementen. Durch Vermeidung der Absorption im Material der Optiken erhöht sich auch deren Lebensdauer. Insgesamt ergibt sich dadurch eine merkliche Senkung der Kosten pro bearbeitetem Werkstück.

Aufgrund des angestrebten starken Unterschieds der erwünschten Strahlgrößen in der langen und der kurzen Achsen auf dem Werkstück (Aspektverhältnis z.B. im Bereich von 100 bis 1000) wird es als günstig angesehen, für jede der beiden Achsen eine eigene Kondensoroptik bzw. ein eigenes Kondensorsystem mit einer unterschiedlichen Brennweite zu verwenden. Im beschriebenen Beispiel beträgt die Brennweite des ersten Kondensorsystems 150-1 (d.h. der Kondensoroptik für die kurze Achse) ca. 150 mm, während sie für das zweite Kondensorsystem 150-2 (für die lange Achse) 2430 mm beträgt.

Sowohl für die kurze als auch für die lange Achse besteht das zugehörige Kondensorsystem aus je zwei zylindrisch gekrümmten Spiegeln, nämlich einem Konkavspiegel und einem Konvexspiegel. Wie bereits bei den Linsenarrays sind die Krümmungsrichtungen der Kondensorspiegel für die lange Achse senkrecht orientiert zu den Krümmungsrichtungen der Kondensorspiegel für die kurze Achse. Die Achse, die den jeweiligen Krümmungsmittelpunkt der Spiegel beschreibt, ist für die Kondensorspiegel der kurzen Achse waagrecht (parallel zur x-Richtung) orientiert, für die der langen Achse senkrecht dazu.

Die Kondensoroptik für die lange Strahlachse, also das zweite Kondensorsystem 150-2, besteht aus dem konkaven Spiegel 150-2A und dem konvexen Spiegel 150-2B, die im Strahlengang nach den Zylinderarrays 140x der optischen Elemente 140-1, 140-2 angeordnet sind. Anschließend trifft der Laserstrahl auf den konvexen Spiegel 150-1A und den konkaven Spiegel 150-1B, die gemeinsam die Kondensoroptik für die kurze Strahlachse bzw. das erste Kondensorsystem 150-1 bilden.

Durch den starken Unterschied in den Brennweiten der Kondensorsysteme entstehen die durch die beiden Homogenisierungsanordnungen erzeugten homogenen Bereiche an deutlich unterschiedlichen Orten des Strahlengangs - die erste Homogenisierungsanordnung (für die kurze Achse) erzeugt ein Zwischenbild ZB bereits in geringem Abstand nach dem zweiten Kondensorspiegel 150-1B, während die Homogenisierungsanordnung für die lange Achse den homogenen Bereich in einer deutlich größeren Entfernung erzeugt, nämlich in der Bearbeitungsebene 105. Der Abstand zwischen den Fokusebenen der kurzen und der langen Achse beträgt im beschriebenen Beispiel ca. 1440 mm.

Da beide homogenen Bereiche in der Werkstückebene bzw. in der Bearbeitungsebene 105 übereinander liegen müssen, wird das Zwischenbild ZB der kurzen Achse durch ein Abbildungssystem 160-1 in die Bearbeitungsebene abgebildet. Die Brennweite der Kondensoroptik der langen Achse ist dabei so gewählt, dass die Summe aus dem Abstand der beiden Hauptebenen der Kondensoroptiken für die beiden Strahlachsen, der Brennweite der Kondensoroptik für die kurze Strahlachse und der Übertragungslänge des Abbildungssystems 160-1 (Summe aus Gegenstands- und Bildweite) entsprechen.

Die Abbildungsoptik bzw. das Abbildungssystem 160-1 für die kurze Achse besteht aus den zwei Spiegeln 160-1A und 160-1B, hat also genau zwei Spiegel. Die Anordnung ist so getroffen, dass der Laserstrahl am ersten Spiegel 160-1A zweimal reflektiert wird. Bei diesem ersten Spiegel handelt es sich um einen größeren zylindrischen Konkavspiegel, der den Laserstrahl auf den zweiten, kleineren konvexen Spiegel 160-1B lenkt, von wo aus der Strahl wieder auf den ersten Spiegel 160-1A zurück reflektiert wird. Dabei werden im Beispielsfall unterschiedliche, nicht überlappende Bereiche der konkaven Spiegelfläche des ersten Spiegels 160-1A genutzt. Da der Laserstrahl zweimal auf den ersten Spiegel 160-1A trifft, kann die Spiegelanordnung des Abbildungssystems 160-1 als Äquivalent eines dreilinsigen transmittiven Objektivs angesehen werden. Der Abbildungsmaßstab des Abbildungssystems 160-1 für die kurze Achse beträgt 1:1, d.h. das Zwischenbild ZB für die kurze Achse wird ohne Größenänderung auf das Werkstück (in die Bearbeitungsebene 105) übertragen. Der Strahlverlauf für die lange Achse wird durch das Abbildungssystem 160-1 nicht verändert. Die Brennweite des ersten Spiegels 160-1A entspricht dem Abstand beider Spiegel und der doppelten Brennweite des zweiten Spiegels 160-1B. Der Abstand des Objektivs bzw. des Abbildungssystems zum Zwischenbild ZB entspricht der doppelten Brennweite des ersten Spiegel 160-1A. Durch den symmetrischen Aufbau werden viele Bildfehler, die durch die erste Reflexion am ersten Spiegel 160-1A entstehen, durch das Auftreffen auf den zweiten Spiegel 160-1B und die zweite Reflexion am ersten Spiegel 160-1A ausgeglichen, insbesondere Koma-Aberrationen.

Vom Abbildungssystem 160-1 wird der Laserstrahl über einen ebenen Umlenkspiegel 170 auf das Werkstück gelenkt. Bei geeigneter Anordnung der Spiegel der Kondensorsysteme könnte der Strahl auch direkt, ohne Verwendung eines Umlenkspiegels, auf das Werkstück treffen. Der Umlenkspiegel 17 ist feststehend montiert. Der Umlenkspiegel könnte auch durch einen beweglichen Umlenkspiegel ersetzt werden, der in Verbindung mit einem (optionalen, sich dargestellten) F-Theta-Objektiv den Laserstrahl über das Werkstück bewegt, beispielsweise durch den Spiegel eines Galvanometerscanners oder einen Polygonspiegel.

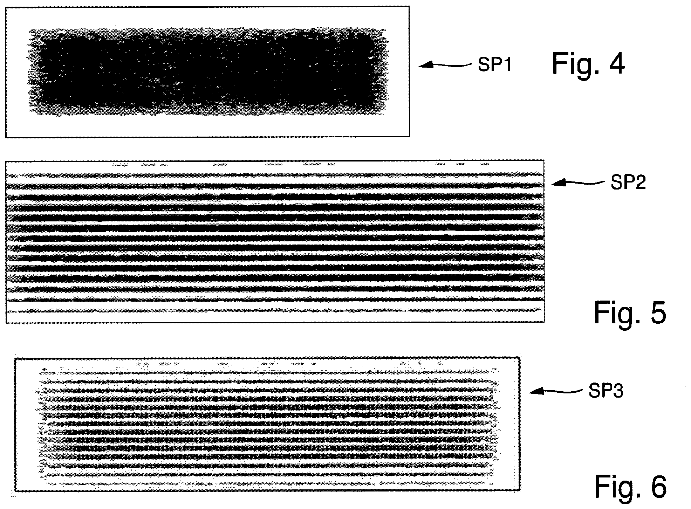

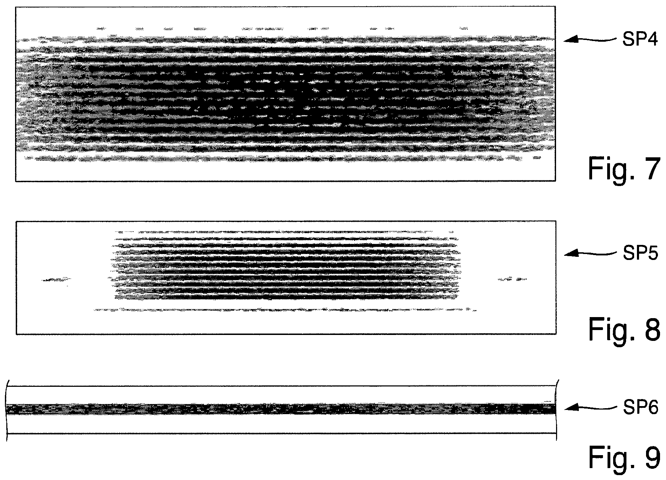

Anhand der Strahlprofile SP1 bis SP6 in den Fig. 4 bis 9 wird die optische Wirkung der einzelnen Komponenten auf die Intensitätsverteilung im Strahlquerschnitt an aufeinanderfolgenden Positionen (in Fig. 1 mit SP1 bis SP6 bezeichnet) entlang der Strahlausbreitung gezeigt. Das Strahlprofil SP1 repräsentiert das Strahlprofil hinter dem Teleskop, also nach dem Strahlaufweitungssystem 120. Der aufgeweitete Strahl SP1 wird durch die Arrays 140-1A, 140-1B für die kurze Achse in parallele Linien aufgespalten (Strahlprofil SP2), anschließend werden die Linien durch die Arrays 140-2A, 140-2B für die lange Achse senkrecht dazu in rechteckige Teilstrahlen aufgespalten (Strahlprofil SP3). Durch die Kondensorsysteme 150-1, 150-2 und die Abbildungsoptik 160 werden die Teilstrahlen über einen längeren Weg wieder überlagert. Strahlprofil SP4 liegt nach dem Kondensorsystem 150-2 für die lange Achse vor, Strahlprofil SP5 nach der Abbildungsoptik 160. Das letzte Strahlprofil SP6 zeigt einen Ausschnitt des Linienstrahls in der Bearbeitungsebene 105 bzw. auf der Werkstückoberfläche.

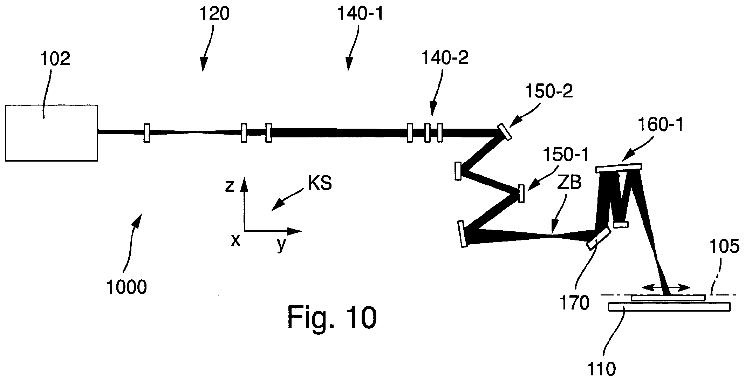

Andere Anordnungen sind möglich. Bei dem Ausführungsbeispiel eines Laserbearbeitungssystems 1000 in Fig. 10 sind gleiche oder ähnliche Komponenten wie beim System 100 aus Fig. 1 mit den gleichen Bezugszeichen bezeichnet. Wie gezeigt kann der Umlenkspiegel 170 auch vor dem Objektiv 160, also vor dem Abbildungssystem 160, angeordnet sein. Durch die Strahlumlenkung kann beispielsweise eine senkrechte oder nahezu senkrechte Anordnung des Abbildungssystems 160 ermöglicht werden, wodurch ggf. eine bessere Ausnutzung des vorhandenen Bauraums erreicht werden kann. Der Laserstrahl trifft in diesem Fall vom Objektiv 160 kommend direkt ohne weitere Umlenkung auf das Werkstück. Ein zweiter Umlenkspiegel zwischen Objektiv und Werkstück könnte zusätzlich vorgesehen sein.

Um die Relativbewegung zwischen Laserstrahl und Werkstück zu erzeugen, wird hier das Werkstück 110 linear in einer Ebene (x-y-Ebene) schräg zur Ebene des einfallenden Strahls bewegt. Der schräge Einfall stellt sicher, dass Rückreflexionen von der Werkstückoberfläche nicht in den Strahlengang des Laserbearbeitungssystems gelangen können. Idealerweise überdeckt der erzeugte Linienstrahl die gesamte Breite des zu bearbeitenden Werkstücks bzw. des zu bearbeitenden Bereichs des Werkstücks, so dass das Werkstück nur entlang einer Achse bewegt werden muss.

Durch die beschriebenen Optik-Systeme für die kurze und die lange Achse entsteht der gewünschte Linienstrahl auf dem Werkstück. Dieser hat bei einigen Ausführungsbeispielen inklusive den hier gezeigten Beispielen eine Länge von 300 - 370 mm und eine Breite von 330 μm. Die Erzeugung eines Linienstrahls mit anderen Abmessungen, z.B. 70 - 110 mm Länge, ist jedoch möglich durch einen Austausch der Zylinderlinsenarrays 140-1x, 140-2x bei gleichzeitiger Weiterverwendung der Kondensorsysteme 150x und des Abbildungssystems 160-1.

Der Linienstrahl ist bei den Ausführungsbeispielen dadurch charakterisiert, dass dessen Profil sowohl in der langen als auch der kurzen Strahlachse eine Flat-Top-Form (nahezu konstante Energiedichte über den größten Teil des Strahlprofils, nahezu senkrechter Abfall der Energiedichte in den Außenbereichen) aufweist, mit einer Homogenitätsabweichung von < 4 % entlang der kurzen Achse oder sogar < 1.5 % entlang der langen Achse. Das Strahlprofil auf dem Werkstück ist schematisch in Fig. 3 gezeigt (das Seitenverhältnis des Linienstrahls ist in der Abbildung allerdings nicht maßstabsgerecht).

Bei den dargestellten Ausführungsbeispielen ist jeweils ein Strahlaufweitungssystem vorgesehen. Das Ziel der Strahlaufweitung ist es, einen Strahl zu erzeugen, der das erste Homogenisiererarray so gut wie möglich ausfüllt. Es sollten möglichst viele Mikrolinsen vom einfallenden Strahl "getroffen" werden, da die Homogenität des Ausgangsstrahls umso besser ist, je mehr Mikrolinsen vom einfallenden Strahl überdeckt werden. Ohne Strahlaufweitung ist die Homogenität in der Regel schlechter. Prinzipiell könnte ein Homogenisierer auch ohne vorgeschaltete Strahlaufweitung benutzt werden. Wenn somit die Anforderungen an die Homogenität nicht zu hoch sind, kann ggf. auf eine der Strahlaufteilung vorgeschaltete Strahlaufweitung, also auf ein der Laserstrahlquelle nachgeschaltetes Strahlaufweitungssystem zum Empfang des rohen Laserstrahls und zur Erzeugung eines aufgeweiteten Laserstrahls, verzichtet werden.

Bei den dargestellten Ausführungsbeispielen sind jeweils abbildende Homogenisierungssysteme vorgesehen. Ein abbildendes Homogenisierungssystem bzw. ein abbildender Homogenisierer weist zwei Linsenarrays und ein nachgeschaltetes Kondensorsystem auf. Bei einem abbildenden Homogenisierer bilden die Linsen des zweiten Linsenarrays die entsprechenden Linsenaperturen des ersten Linsenarrays ab, diese einzelnen Bilder werden dann von dem Kondensorsystem in dessen Brennebene überlagert. Alternativ kann in manchen Fällen auch ein nicht-abbildender Homogenisierer (bzw. ein nicht-abbildendes Homogenisierungssystem) vorgesehen sein. Ein nicht-abbildender Homogenisierer besteht aus nur einem Linsenarray und einem nachgeschalteten Kondensorsystem. Nicht-abbildende Homogenisierer sind im Allgemeinen besonders gut für die Ausleuchtung möglichst großer Flächen geeignet, während abbildende Homogenisierer eine bessere Homogenität erreichen können. Bei abbildenden Homogenisierungssystemen lässt sich die Liniengröße leichter variieren, z.B. durch Änderung des Abstands der Linsenarrays. Dies kann auch zum Ausgleich von Fertigungstoleranzen genutzt werden.

**Patentansprüche**

1. Laserbearbeitungssystem (100, 1000) zur Erzeugung eines Laserstrahls mit einem linienförmigen Strahlquerschnitt mit einer kurzen Achse und einer dazu senkrechten langen Achse in einer Bearbeitungsebene (105), umfassend:

   eine Laserstrahlquelle (102) zur Erzeugung eines rohen Laserstrahls;
   einem der Laserstrahlquelle (102) nachgeschalteten Strahlaufweitungssystem (120) zum Empfang des rohen Laserstrahls und zur Erzeugung eines aufgeweiteten Laserstrahls;
   einem dem Strahlaufweitungssystem nachgeschalteten Homogenisierungssystem zum Empfang des aufgeweiteten Laserstrahls und zur Erzeugung eines in Bezug auf die Lichtintensitätsverteilung homogenisierten Laserstrahls mit linienförmigem Strahlquerschnitt in der Bearbeitungsebene (105),
   wobei das Homogenisierungssystem eine erste Homogenisierungsanordnung zur Homogenisierung entlang der kurzen Achse und eine zweite Homogenisierungsanordnung zur Homogenisierung entlang der langen Achse aufweist, wobei jede der Homogenisierungsanordnungen optische Elemente (140-1, 140-2) zur Zerlegung des Laserstrahls in eine Vielzahl von Teilstrahlen und ein nachgeschaltetes Kondensorsystem (150-1, 150-2) zur Überlagerung der Teilstrahlen in einer Überlagerungsebene aufweist, **dadurch gekennzeichnet, dass**
   die erste Homogenisierungsanordnung ein erstes Kondensorsystem (150-1) mit mindestens einem ersten Spiegel (150-1A, 150-1B) und die zweite Homogenisierungsanordnung ein zweites Kondensorsystem (150-2) mit mindestens einem zweiten Spiegel (150-2A, 150-2B) aufweist.

2. Laserbearbeitungssystem nach Anspruch 1, **dadurch gekennzeichnet, dass** das erste Kondensorsystem (150-1) und das zweite Kondensorsystem (150-2) als katoptrische optische Systeme ausgebildet sind.

3. Laserbearbeitungssystem nach Anspruch 1 oder 2, **dadurch gekennzeichnet, dass** das erste Kondensorsystem (150-1) und/oder das zweite Kondensorsystem (150-2) genau zwei Spiegel (150-1A, 150-1B, 150-2A, 150-2B) aufweist.

4. Laserbearbeitungssystem nach einem der vorhergehenden Ansprüche, **dadurch gekennzeichnet, dass** die optischen Elemente (140-1, 140-2) zur Zerlegung des Laserstrahls in eine Vielzahl von Teilstrahlen für jede der Achsen ein erstes Zylinderlinsenarray (140-1A, 150-1A) und ein nachgeschaltetes zweites Zylinderlinsenarray (140-1B, 150-1B) aufweisen, so dass die erste und die zweite Homogenisierungsanordnung jeweils ein abbildendes Homogenisierungssystem bilden, oder dass die optischen Elemente zur Zerlegung des Laserstrahls in eine Vielzahl von Teilstrahlen für jede der Achsen ein einziges Zylinderlinsenarray aufweisen.

**5.** Laserbearbeitungssystem nach einem der vorhergehenden Ansprüche, **dadurch gekennzeichnet, dass** das Laserbearbeitungssystem derart ausgebildet ist, dass ein Aspektverhältnis zwischen den Längen des Strahlquerschnitts entlang der langen Achse und der kurze Achse im Bereich von 100 oder mehr liegt, wobei das Aspektverhältnis vorzugsweise im Bereich von 100 bis 1000 liegt.

**6.** Laserbearbeitungssystem nach einem der vorhergehenden Ansprüche, **dadurch gekennzeichnet, dass** das erste Kondensorsystem (150-1) dazu ausgelegt ist, mit Abstand vor der Bearbeitungsebene (105) ein reelles Zwischenbild (ZB) zu erzeugen und dass zwischen dem Zwischenbild und der Bearbeitungsebene ein Abbildungssystem (160-1) zur Abbildung des Zwischenbildes (ZB) auf die Bearbeitungsebene angeordnet ist.

**7.** Laserbearbeitungssystem nach Anspruch 6, **dadurch gekennzeichnet, dass** das Abbildungssystem (160-1) eine oder mehrere der folgenden Merkmale aufweist:

(i) das Abbildungssystem (160-1) ist dafür ausgelegt, das Zwischenbild (ZB) ohne Größenänderung in der kurzen Achse in die Bearbeitungsebene (105) abzubilden;
(ii) das Abbildungssystem (160-1) weist einen ersten Spiegel (160-1A) und genau einen zweiten Spiegel (160-1B) auf, wobei vorzugsweise das Abbildungssystem derart angeordnet und aufgebaut ist, dass der Laserstrahl (LS) von einem ersten Bereich des ersten Spiegels (160-1A) zu dem zweiten Spiegel (160-1B) und vom zweiten Spiegel zu einen zweiten Bereich des ersten Spiegels (160-1A) reflektiert wird;
(iii) das Abbildungssystem (160-1) weist einen symmetrischen Aufbau auf.

**8.** Laserbearbeitungssystem nach einem der vorhergehenden Ansprüche, **dadurch gekennzeichnet, dass** im Strahlengang zwischen der Laserquelle (102) und der Bearbeitungsebene (105) mindestens ein ebener Umlenkspiegel (170) angeordnet ist.

**9.** Laserbearbeitungssystem nach Anspruch 8, **dadurch gekennzeichnet, dass** der Umlenkspiegel (170) optisch zwischen einem letzten optischen Element mit Brechkraft und der Bearbeitungsebene (105) angeordnet ist.

**10.** Laserbearbeitungssystem nach Anspruch 9, **dadurch gekennzeichnet, dass** der Umlenkspiegel (170) beweglich gelagert und gesteuert verschwenkbar ist.

**11.** Laserbearbeitungssystem nach Anspruch 6 oder 7, **dadurch gekennzeichnet, dass** vor dem Abbildungssystem (160-1) ein ebener Umlenkspiegel angeordnet ist, insbesondere zwischen dem Zwischenbild (ZB) und dem Abbildungssystem (160-1).

**12.** Laserbearbeitungssystem nach einem der vorhergehenden Ansprüche, **dadurch gekennzeichnet, dass** bei der ersten Homogenisierungsanordnung und/oder bei der zweiten Homogenisierungsanordnung die optischen Elemente (140-1, 140-2) zur Erzeugung der Vielzahl von Teilstrahlen konstruktiv auswechselbar sind, wobei sie vorzugsweise in einer als Ganzes austauschbaren Baugruppe zusammengefasst sind.

**13.** Laserbearbeitungssystem nach einem der vorhergehenden Ansprüche, **dadurch gekennzeichnet, dass** das Laserbearbeitungssystem (100, 1000) derart ausgebildet ist, dass der Strahlquerschnitt in der Bearbeitungsebene (105) in der langen Achse und in der kurzen Achse eine Flat-Top-Form aufweist, wobei eine Homogenitätsabweichung entlang der kurzen Achse bei 4 % oder weniger und/oder eine Homogenitätsabweichung entlang der langen Achse bei 1,5 % oder weniger liegt.

**Claims**

**1.** Laser processing system (100, 1000) for producing a laser beam with a line-shaped beam cross section with a short axis and a long axis perpendicular thereto in a processing plane (105), comprising:

a laser beam source (102) for producing a raw laser beam;
a beam expansion system (120) disposed downstream of the laser beam source (102) and serving to receive the raw laser beam and produce an expanded laser beam;
a homogenization system disposed downstream of the beam expansion system and serving to receive the expanded laser beam and produce a laser beam that is homogenized in relation to the light intensity distribution and has a line-shaped beam cross section in the processing plane (105),
wherein the homogenization system comprises a first homogenization arrangement for homogenization along the short axis and a second homogenization arrangement for homogenization along the long axis, wherein each of the homogenization arrangements comprises optical elements (140-1, 140-2) for splitting the laser beam into a multiplicity of partial beams and a downstream condenser system (150-1, 150-2) for superimposing the partial beams in a superposition plane,

**characterized in that**
the first homogenization arrangement comprises a first condenser system (150-1) with at least one first mirror (150-1A, 150-1B) and the second homogenization arrangement comprises a second condenser system (150-2) with at least one second mirror (150-2A, 150-2B).

2. Laser processing system according to Claim 1, **characterized in that** the first condenser system (150-1) and the second condenser system (150-2) are embodied as catoptric optical systems.

3. Laser processing system according to Claim 1 or 2, **characterized in that** the first condenser system (150-1) and/or the second condenser system (150-2) comprises exactly two mirrors (150-1A, 150-1B, 150-2A, 150-2B).

4. Laser processing system according to any of the preceding claims, **characterized in that** the optical elements (140-1, 140-2) for splitting the laser beam into a multiplicity of partial beams comprise a first cylindrical lens array (140-1A, 150-1A) and, disposed downstream thereof, a second cylindrical lens array (140-1B, 150-1B) for each of the axes such that the first and the second homogenization arrangement each form an imaging homogenization system, or **in that** the optical elements for splitting the laser beam into a multiplicity of partial beams comprise a single cylindrical lens array for each of the axes.

5. Laser processing system according to any of the preceding claims, **characterized in that** the laser processing system is designed such that an aspect ratio between the lengths of the beam cross section along the long axis and the short axis lies in the range of 100 or more, with the aspect ratio preferably lying in the range from 100 to 1000.

6. Laser processing system according to any of the preceding claims, **characterized in that** the first condenser system (150-1) is designed to produce a real intermediate image (ZB) at a distance upstream of the processing plane (105) and **in that** an imaging system (160-1) for imaging the intermediate image (ZB) onto the processing plane is arranged between the intermediate image and the processing plane.

7. Laser processing system according to Claim 6, **characterized in that** the imaging system (160-1) has one or more of the following features:

(i) the imaging system (160-1) is designed to image the intermediate image (ZB) into the processing plane (105) without changing the size in the short axis;

(ii) the imaging system (160-1) comprises a first mirror (160-1A) and exactly one second mirror (160-1B), wherein, preferably, the imaging system is arranged and constructed in such a way that the laser beam (LS) is reflected from a first region of the first mirror (160-1A) to the second mirror (160-1B) and from the second mirror to a second region of the first mirror (160-1A);
(iii) the imaging system (160-1) has a symmetric structure.

8. Laser processing system according to any of the preceding claims, **characterized in that** at least one plane deflection mirror (170) is arranged in the beam path between the laser source (102) and the processing plane (105).

9. Laser processing system according to Claim 8, **characterized in that** the deflection mirror (170) is optically arranged between a last optical element with refractive power and the processing plane (105).

10. Laser processing system according to Claim 9, **characterized in that** the deflection mirror (170) is movably mounted and pivotable in a controlled manner.

11. Laser processing system according to Claim 6 or 7, **characterized in that** a plane deflection mirror is arranged upstream of the imaging system (160-1), in particular between the intermediate image (ZB) and the imaging system (160-1).

12. Laser processing system according to any of the preceding claims, **characterized in that** the optical elements (140-1, 140-2) that serve to produce the multiplicity of partial beams and are found in the first homogenization arrangement and/or in the second homogenization arrangement are structurally exchangeable, wherein these optical elements are preferably combined in an assembly that is exchangeable as a whole.

13. Laser processing system according to any of the preceding claims, **characterized in that** the laser processing system (100, 1000) is designed in such a way that the beam cross section in the processing plane (105) has a flat-top form along the long axis and along the short axis, wherein a homogeneity deviation along the short axis is 4% or less and/or a homogeneity deviation along the long axis is 1.5% or less.

**Revendications**

1. Système d'usinage au laser (100, 1000) destiné à générer un faisceau laser avec une section transversale de faisceau linéaire ayant un axe court et un axe long perpendiculaire à celui-ci dans un plan d'usinage (105), comprenant :

une source de faisceau laser (102) destinée à générer un faisceau laser brut ;
un système d'élargissement de faisceau (120) monté en aval de la source de faisceau laser (102) pour la réception du faisceau laser brut et pour générer un faisceau laser élargi ;
un système d'homogénéisation monté en aval du système d'élargissement de faisceau pour la réception du faisceau laser élargi et pour générer un faisceau laser homogénéisé par rapport à la distribution de l'intensité lumineuse, avec une section transversale de faisceau linéaire dans le plan d'usinage (105),
le système d'homogénéisation possédant un premier arrangement d'homogénéisation servant à l'homogénéisation le long de l'axe court et un deuxième arrangement d'homogénéisation servant à l'homogénéisation le long de l'axe long, chacun des arrangements d'homogénéisation possédant des éléments optiques (140-1, 140-2) destinés à décomposer le faisceau laser en une pluralité de faisceaux partiels et un système condenseur (150-1, 150-2) monté en aval destiné à la superposition des faisceaux partiels dans un plan de superposition,
**caractérisé en ce que**
le premier arrangement d'homogénéisation possède un premier système condenseur (150-1) comprenant au moins un premier miroir (150-1A, 150-1B) et le deuxième arrangement d'homogénéisation un deuxième système condenseur (150-2) comprenant au moins un deuxième miroir (150-2A, 150-2B).

2. Système d'usinage au laser selon la revendication 1, **caractérisé en ce que** le premier système condenseur (150-1) et le deuxième système condenseur (150-2) sont réalisés sous la forme de systèmes optiques catoptriques.

3. Système d'usinage au laser selon la revendication 1 ou 2, **caractérisé en ce que** le premier système condenseur (150-1) et/ou le deuxième système condenseur (150-2) possède exactement deux miroirs (150-1A, 150-1B, 150-2A, 150-2B).

4. Système d'usinage au laser selon l'une des revendications précédentes, **caractérisé en ce que** les éléments optiques (140-1, 140-2) destinés à décomposer le faisceau laser en une pluralité de faisceaux partiels possèdent pour chacun des axes un premier réseau de lentilles cylindriques (140-1A, 150-1A) et un deuxième réseau de lentilles cylindriques (140-1B, 150-1B) monté en aval, de sorte que les premier et deuxième arrangements d'homogénéisation forment respectivement un système d'homogénéisation d'imagerie, ou **en ce que** les éléments optiques destinés à décomposer le faisceau laser en une pluralité de faisceaux partiels possèdent pour chacun des axes un seul réseau de lentilles cylindriques.

5. Système d'usinage au laser selon l'une des revendications précédentes, **caractérisé en ce que** le système d'usinage au laser est configuré de telle sorte qu'un rapport d'aspect entre les longueurs de la section transversale du faisceau le long de l'axe long et de l'axe court soit compris dans la plage de 100 ou plus, le rapport d'aspect étant de préférence compris dans la plage de 100 à 1000.

6. Système d'usinage au laser selon l'une des revendications précédentes, **caractérisé en ce que** le premier système condenseur (150-1) est conçu pour générer une image intermédiaire (ZB) réelle à une distance donnée devant le plan d'usinage (105) et **en ce qu'**un système d'imagerie (160-1) est disposé entre l'image intermédiaire et le plan d'usinage pour représenter l'image intermédiaire (ZB) sur le plan d'usinage.

7. Système d'usinage au laser selon la revendication 6, **caractérisé en ce que** le système d'imagerie (160-1) présente une ou plusieurs des caractéristiques suivantes :

(i) le système d'imagerie (160-1) est conçu pour représenter l'image intermédiaire (ZB) dans le plan de traitement (105) sans changement de taille dans l'axe court ;
(ii) le système d'imagerie (160-1) possède un premier miroir (160-1A) et exactement un deuxième miroir (160-1B), le système d'imagerie étant de préférence disposé et construit de telle sorte que le faisceau laser (LS) est réfléchi par une première zone du premier miroir (160-1A) vers le deuxième miroir (160-1B) et par le deuxième miroir vers une deuxième zone du premier miroir (160-1A) ;
(iii) le système d'imagerie (160-1) présente une structure symétrique.

8. Système d'usinage au laser selon l'une des revendications précédentes, **caractérisé en ce qu'**au moins un miroir de déviation plan (170) est disposé dans le trajet du faisceau entre la source laser (102) et le plan d'usinage (105).

9. Système d'usinage au laser selon la revendication 8, **caractérisé en ce que** le miroir de déviation (170) est disposé optiquement entre un dernier élément optique ayant un pouvoir réfringent et le plan d'usinage (105).

**10.** Système d'usinage au laser selon la revendication 9, **caractérisé en ce que** le miroir de déviation (170) est monté mobile et peut pivoter de manière commandée.

**11.** Système d'usinage au laser selon la revendication 6 ou 7, **caractérisé en ce qu'**un miroir de déviation plan est disposé devant le système d'imagerie (160-1), notamment entre l'image intermédiaire (ZB) et le système d'imagerie (160-1).

**12.** Système d'usinage au laser selon l'une des revendications précédentes, **caractérisé en ce qu'**au niveau du premier arrangement d'homogénéisation et/ou au niveau du deuxième arrangement d'homogénéisation, les éléments optiques (140-1, 140-2) destinés à générer la pluralité de faisceaux partiels sont interchangeables par construction, ceux-ci étant de préférence regroupés en un module interchangeable dans son ensemble.

**13.** Système d'usinage au laser selon l'une des revendications précédentes, **caractérisé en ce que** le système d'usinage au laser (100, 1000) est configuré de telle sorte que la section transversale du faisceau dans le plan d'usinage (105) présente une forme à sommet plat dans l'axe long et dans l'axe court, un écart d'homogénéité le long de l'axe court étant de 4 % ou moins et/ou un écart d'homogénéité le long de l'axe long étant de 1,5 % ou moins.

Fig. 1

EP 3 860 798 B1

Fig. 2

Fig. 3

SP1 Fig. 4

SP2

Fig. 5

SP3

Fig. 6

← SP4

Fig. 7

← SP5

Fig. 8

← SP6

Fig. 9

EP 3 860 798 B1

Fig. 10

**IN DER BESCHREIBUNG AUFGEFÜHRTE DOKUMENTE**

**In der Beschreibung aufgeführte Patentdokumente**

- DE 102007044298 B3
- WO 2011012503 A1